Europäisches Patentamt

European Patent Office

Office européen des brevets

(11) Publication number: **0 140 612**
A2

# EUROPEAN PATENT APPLICATION

(21) Application number: 84306885.9

(22) Date of filing: 09.10.84

(51) Int. Cl.⁴: **F 16 J 13/08**

(30) Priority: 11.10.83 GB 8327198

(43) Date of publication of application: 08.05.85
Bulletin 85/19

(84) Designated Contracting States: **DE FR GB IT**

(71) Applicant: **SWINNEY ENGINEERING LIMITED, 26 Dacre Street, Morpeth Northumberland NE61 1HR (GB)**

(72) Inventor: **Swinney, Denis Percy, High Grates Castle Bank, Morpeth Northumberland (GB)**

(74) Representative: **Wilson, Nicholas Martin et al, WITHERS & ROGERS 4 Dyer's Buildings Holborn, London EC1N 2JT (GB)**

(54) Closure for pipes or vessels.

(57) A closure for an opening in a pressure pipe or vessel is adapted to co-operate with an annular groove about the opening. The closure has three wedge-shaped locking pieces which may be moved into locking engagement with the annular groove by the action of levers pivotally attached to the locking pieces and to an angularly displaceable central boss. The central boss includes three radially outwardly directed extensions which, on rotation of the central boss to lock the closure, are brought into alignment with three radially inwardly directed extensions one on an end of each of the locking pieces. The aligned extensions co-operate to prevent radial inward movement of the locking pieces in the locked position.

0140612

## CLOSURE FOR PIPES OR VESSELS

This invention relates to an improved closure for pipes or vessels.

In our prior British Patent Specification No. 1181757 there is disclosed a closure for an opening in a pressure pipe or vessel adapted to co-operate with a circular groove or bead around the opening, the closure comprising a circular cover, an angularly displaceable member pivoted at the centre of the cover, and at least two arcuate locking members positioned around the periphery of the cover, each locking member being linked at one end to the angularly displaceable member and pivoted at the other end on the cover adjacent to the periphery of the cover, so that in operation when the closure is fitted to the container and the angularly displaceable member turned in the required direction relative to the cover, the locking members move into engagement with the groove or bead thereby locking the closure in position.

We now propose to modify our original design in order to accept higher diameters and higher pressures.

According to the present invention there is provided a closure for an opening in a pressure pipe or vessel adapted to co-operate with a groove

- 2 -     0140612

or bead around the opening, the closure comprising a cover, an angularly displaceable member pivoted at the centre of the cover, and at least two arcuate locking pieces positioned around the periphery of the cover, each locking piece being linked adjacent one end to the angularly displaceable member and pivoted adjacent the other end on the cover, and co-operating surface means on the angularly displaceable member and on said one end of the locking pieces, so that in operation when the closure is fitted to the pressure pipe or vessel and the angularly displaceable member is turned in the required direction relative to the cover, the locking members move into engagement with the groove or bead locking the closure in position and the co-operating surface means on the angularly displaceable member and the locking pieces co-operate to prevent radial inward movement of the said one ends of the locking pieces.

The present invention is particularly advantageous with locking the operative edges of which pieces are wedge-shaped in cross-section. With parallel-sided locking pieces the pieces become trapped under pressure, but tapered locking pieces have a tendency to come out under pressure.

Preferably, there are three locking pieces and the co-operating surface means comprises three

- 3 -    0140612

extension on a central hub forming said angularly displaceable member, and an extension on each of the said one ends of the locking pieces so that in the locked position the extensions align with one another.

In a preffered embodiment co-operating surface means are additionally provided between the said one ends of the locking pieces and the other end of adjacent locking pieces to assist in preventing radial movement of the other ends of the locking pieces. There may be one or two links between the central hub and each of the locking pieces.

The invention also includes a closure for an opening in a pressure pipe or vessel adapted to co-operate with an annular groove about the opening, the closure comprising a plurality of locking pieces which may be moved into locking engagment with the annular groove by the action of levers pivotally attached to the locking pieces and to an angularly displaceable central boss, the central boss including a number of radially outwardly directed extensions which, on rotation of the central boss to lock the closure, are brought into alignment with radially inwardly directed extensions on the locking pieces which together co-operate to prevent radial inward movement of the locking pieces in the locked position.

- 4 -        0140612

The invention will now be described by way of example with reference to the accompanying drawings in which:

Figure 1 is a front elevation of a closure in accordance with the invention;

Figure 2 is a section on A-A in Figure 1;

Figure 3 is a front elevation of the closure mechanism in the closed position;

Figure 4 is a front elevation of the closure mechanism in the open position;

Figure 5 is a part section on B-B in Figure 1; and

Figure 6 is a view on arrow A in Figure 1.

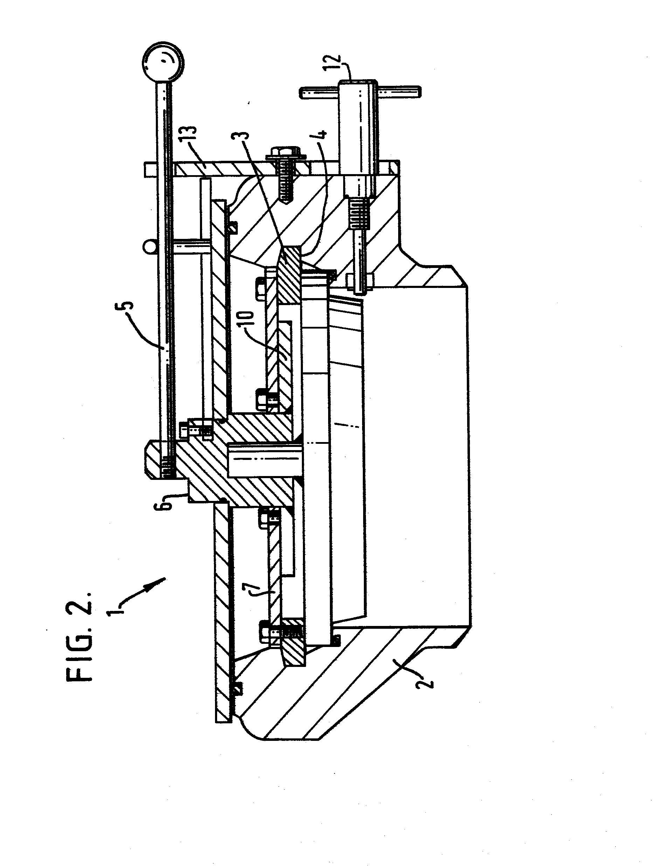

In the drawings a closure 1 for closing an opening in a pressure pipe or vessel 2 has three arcuate locking pieces 3 for locking the closure 1 in position. The locking pieces 3 are operable to engage in a recess 4 (Figure 2) to lock the closure 1 on angular movement of a centre lever 5 to the boss 6 of which the locking pieces 3 are connected by means of links 7. The links 7 are pivotally connected one to one end of each of the locking pieces 3. The other end of each of the locking pieces 3 is pivotally connected to the closure 1 at respective points 9. The locking pieces 3 have a wedge-shape in cross-section as clearly shown in Figure 2. At each of the positions at which the links 7 are connected to the central boss 6, the boss 6 is provided with an extension 10. These extensions 10 co-operate with respective extension surfaces 11 on the movable ends of the locking pieces 3 as will be explained in more detail below.

The retention of the centre lever 5 in the closed position is similar to that disclosed in our prior U.K. Patent No. 1603814 and includes a safety vent 12 screwed into the position shown in Figure 2. The safety vent 12 is linked with centre lever 5 by a locking plate 13 which, in the position shown, prevents angular movement of the centre lever 5. The safety vent 12 is to provide a visible or audible warning of residual gas pressure within the pipe or vessel so that the operator will not open the closure until the warnings have ceased ie. until the pressure is atmospheric. The fluid in the pipe or vessel may be liquid or gas or any combination thereof.

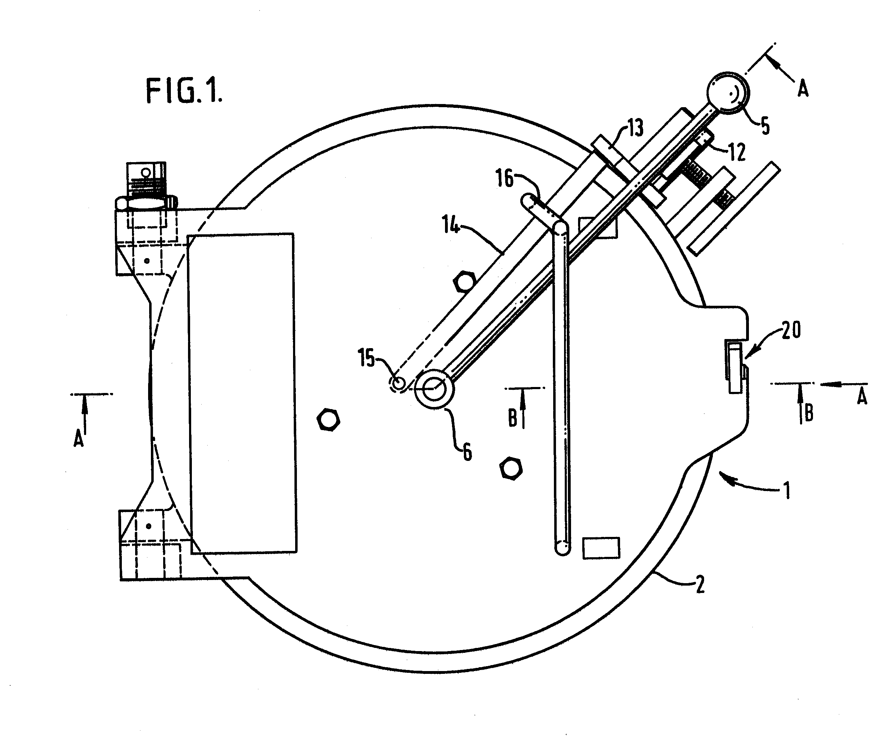

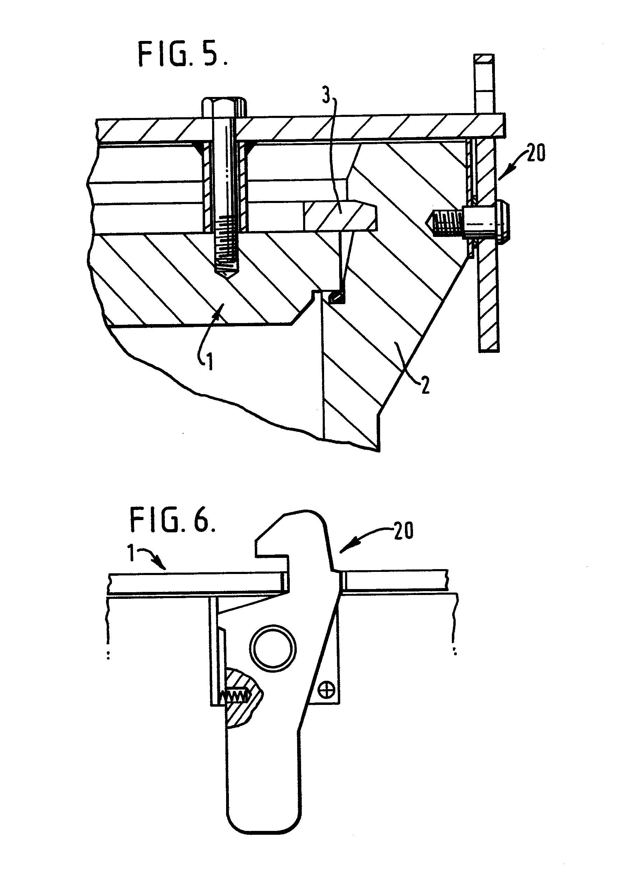

From Figure 1 it will be seen that a bar 14 is pivoted from the central hub 6 by a hinge pin 15 and is guided through a guide 16 to prevent the centre lever 5 being engaged without the safety vent 12 being operated. To open the closure from the position shown the safety vent 12 is unscrewed and the locking plate 13 is moved out of engagement with the lever 5. The lever 5 is then moved to the open position and the bar 14 moves to the release position. On closing the closure lever 5 the bar 14 will prevent complete closure unless the safety vent 12 has been released from preventing complete angular movement of the lever 5 into the engaged position. The safety vent 12 is then replaced. This acts as an additional measure preventing the closure being shut without the safety vent being operated. Figure 6 shows a spring operable latch 20 which engages the closure 1.

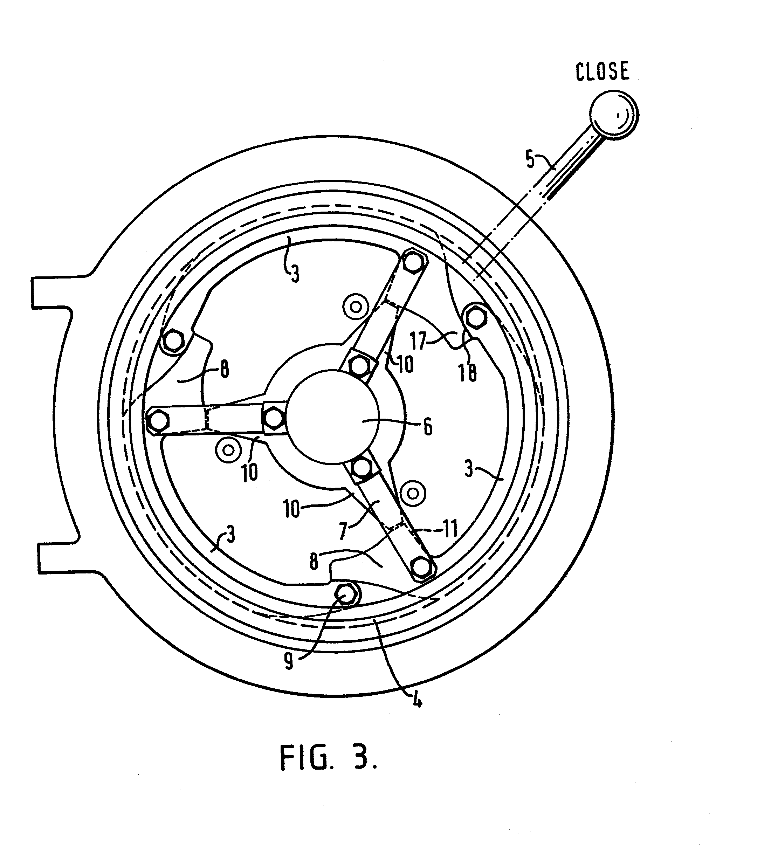

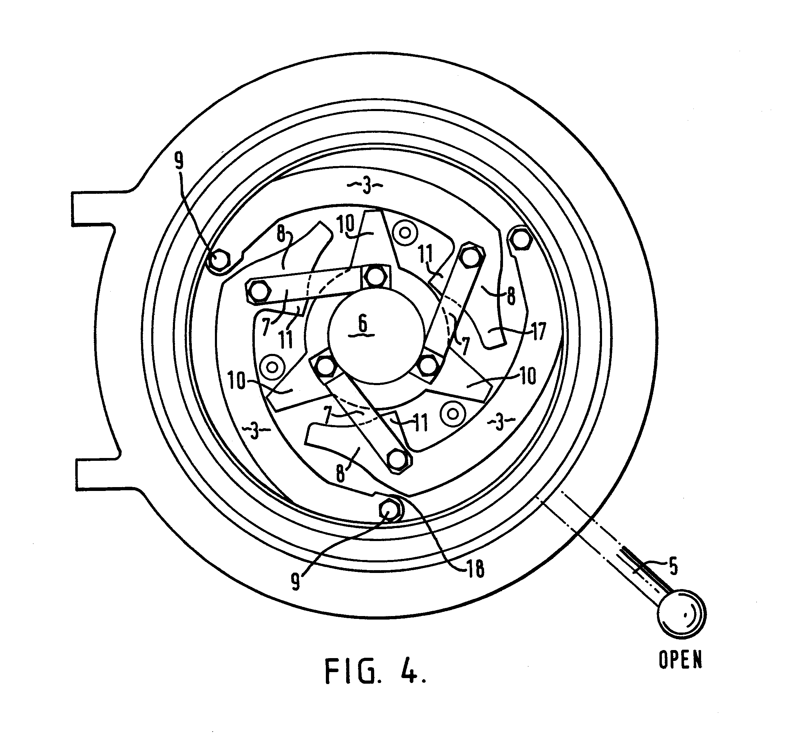

In the locking mechanism of the invention as the central lever 5 is turned from the open position shown in Figure 4 to the closed position in Figure 3 the locking pieces 3 are pushed into the recess 4 by respective links 7. In addition, the extensions 10 on the boss 6 align closely with the extension surfaces 11 on the locking pieces 3 ensuring that the locking pieces cannot move radially inwardly so that the closure 1 is secure against high pressure within the pressure pipe or vessel 2.

Although the arrangement of the present invention will prevent radial movement of the locking pieces 3, the figures also show an additional locking arrangement which holds the other end of the locking pieces 3. This arrangement comprises an added extension 17 on each of the locking pieces 3 which aligns closely with a flat 18 on the next adjacent locking piece 3 so assisting the pin 9 and ensuring that this end of the locking piece 3 is also firmly held in position.

The preferred embodiment has locking pieces which have a tapered fit into an annular groove and is arranged for retaining high pressures eg. between 1000 psi and 3500psi (70 bar to 245 bar) and has at least 70% engagement of the locking pieces in the annular groove.

CLAIMS:

1. A closure for an opening in a pressure pipe or vessel adapted to co-operate with a groove or bead around the opening, the closure comprising a cover, an angularly displaceable member pivoted at the centre of the cover, and at least two arcuate locking pieces positioned around the periphery of the cover, each locking piece being linked adjacent one end to the angularly displaceable member and pivoted adjacent the other end on the cover, and co-operating surface means on the angularly displaceable member and on said one end of the locking pieces, so that in operation when the closure is fitted to the pressure pipe or vessel and the angularly displaceable member is turned in the required directeion relative to the cover, the locking members move into engagement with the groove or bead locking the closure in position and the co-operating surface means on the angularly displaceable member and the locking pieces co-operate to prevent radial inward movement of the said one ends of the locking pieces.

2. A closure according to claim 1 wherein the locking pieces co-operate with a groove around the opening and the operative edges of the locking pieces are wedge-shaped in cross-section.

3. A closure according to claim 1 or 2 wherein

0140612

there are three locking pieces.

4.    A closure according to any one of the preceding claims wherein the co-operating surface means comprises extensions on a central hub forming said angularly displaceable member, and an extension on each of the said one ends of the locking pieces so that in the locked position the extensions align with one another.

5.    A closure according to any one of the preceding claims including second co-operating surface means between the said one ends of the locking pieces and the other end of adjacent locking pieces to assist in preventing radial movement of the other ends of the locking pieces.

6.    A closure according to claim 5 wherein the second co-operating surface means comprises a circumferential extension on said one ends of the locking pieces, which in the locked position, aligns closely with respective flats on the other ends of adjacent locking pieces.

7.    A closure according to any one of the preceding claims wherein each of the locking pieces is connected to the angularly displaceable member by a single link.

8.    A closure for an opening in a pressure pipe or vessel adapted to co-operate with an annular groove about the opening, the closure comprising a plurality of locking pieces which may be moved into locking engagement with the annular groove by the action of levers pivotally attached to the locking pieces and to an angularly displaceable central boss, the central boss including a number of radially outwardly directed extensions which, on rotation of the central boss to lock the closure, are brought into alignment with radially inwardly directed extensions on the locking pieces which together co-operate to prevent radial inward movement of the locking pieces in the locked position.

FIG.1.

0140612

FIG. 2.

FIG. 3.

FIG. 4.

OPEN

FIG. 5.

FIG. 6.